# EUROPÄISCHE PATENTSCHRIFT

(11) **EP 1 362 803 B1**
(45) Veröffentlichungstag und Bekanntmachung des Hinweises auf die Patenterteilung: **25.03.2009**
(21) Anmeldenummer: 03010371.7
(22) Anmeldetag: 08.05.2003
(51) Int. Cl.: B65G 13/07, B65G 13/08

(54) **Rollenförderer**
Roller conveyor
Convoyeur à rouleaux

(30) Priorität: 14.05.2002 DE 20207498 U
(43) Veröffentlichungstag der Anmeldung: 19.11.2003
(73) Patentinhaber: TRANSNORM SYSTEM GmbH, 31177 Harsum (DE)
(72) Erfinder: Warnecke, Karl, 31079 Sibbesse (DE)
(74) Vertreter: Siekmann, Gunnar

(56) Entgegenhaltungen:
- DE-A1- 3 308 263
- FR-A1- 2 108 878
- US-A- 3 901 379
- US-A- 4 588 073
- US-A- 5 007 526

## Beschreibung

Die Erfindung betrifft einen Rollenförderer mit drehbar angeordneten Rollen zum Transport von Gütern und mit einem unterhalb der Rollen angeordneten Riemen zum Antrieb der Rollen, wobei der Riemen im wesentlichen vertikal ausgerichtet ist. Derartige Rollenförderer mit angetriebenen Rollenbahnen sind bekannt. Grundsätzlich erfolgen diese Antriebe entweder über Ketten oder über Riemen. Riemen haben gegenüber Ketten die Vorteile, daß ein Antrieb mit Riemen vergleichsweise geräuscharm ist und sich hohe Geschwindigkeiten erzielen lassen. Beim Antrieb mit Riemen wird ein Antrieb mit Flachriemen und Rundriemen unterschieden. Zu den Flachriemen gehören auch Zahnriemen. Demgegenüber fallen Keilriemen unter den Oberbegriff Rundriemen. Der Flachriemen hat den Vorteil, daß große Kräfte übertragen werden können. Jedoch ist der Flachriemen aufgrund seiner horizontalen Ausrichtung unter den Rollen nicht zu den Seiten biegbar und daher nur für den Antrieb in geraden Streckenabschnitten geeignet. In den Flachriemen sind Zugträger, wie beispielsweise Kevlarfäden oder Drahtzüge oder auch nur ganz allgemein ein besonders strapazierfähiges Gewebe integriert, so daß mit dem Flachriemen mit seinem im wesentlichen rechteckigen Profil Rollenförderer mit Längen von etwa 20m bis 30m antreibbar sind. Demgegenüber sind Rundriemen auch zu den Seiten führbar und können daher auch zum Antrieb beispielsweise in Kurven verwendet werden. Derartige Rundriemen sind jedoch in der Regel nur für Rollenförderer bis zu 10m geeignet.

Der Erfindung liegt die Aufgabe zugrunde, einen Rollenförderer der eingangs genannten Art zu schaffen, der auch in Kurvenbereichen mit einem besonders belastbaren Riemen antreibbar ist.

Die Lösung dieser Aufgabe erfolgt mit einem Rollenförderer mit den Merkmalen des Anspruchs 1. Vorteilhafte Weiterbildungen der Erfindung sind in den Unteransprüchen beschrieben.

Erfindungswesentlich bei einem Rollenförderer mit drehbar angeordneten Rollen zum Transport von Gütern und mit einem unterhalb der Rollen angeordneten Riemen zum Antrieb der Rollen ist dabei, wobei der Riemen im wesentlichen vertikal ausgerichtet ist, daß an der oberen, mit den Rollen in Kontakt tretenden Kante des Riemens ein durchgängiges Profilelement angeordnet ist und daß das Profilelement breiter als der Riemen ausgebildet ist und diesen zu beiden Seiten überragt. Es kann dabei ein länglich ausgebildeter Riemen, insbesondere mit im wesentlichen rechteckigem Profil verwendet werden, der ausreichend mit Zugträgern, wie Kevlarfäden oder Drähten versehen ist und auf diese Weise besonders hohen Zugkräften standhält und entsprechend lang ausgebildet sein kann. Durch die vertikale Ausrichtung des Riemens ist auch eine seitliche Verbiegung möglich, und der Riemen kann den Kurven und Bögen des Rollenförderers folgen. Bei einer derartigen Ausrichtung ist weiterhin von Vorteil, daß sich auf der relativ schmalen oberen Kante des Profilelementes weniger Schmutz ansammeln kann und damit auch weniger Schmutz auf die Rollen und das zu fördernde Gut übertragen wird. Auch der Wartungsaufwand ist dadurch geringer. Dies insbesondere deshalb, da die obere Breite des Profilelementes kleiner ist als die sonst übliche Breite des Riemens bzw. im vorliegenden Fall die Breite des Profilelementes kleiner ist als die Höhe des vertikal angeordneten Riemens. Das Profilelement ist dabei durchgängig und unterbrechungsfrei über die gesamte Länge des Riemens ausgebildet, so daß ein ständiger Kontakt des Profilelementes mit den durch den Riemen und das Profilelement angetriebenen Rollen gegeben ist. Das Profilelement ist breiter als der Riemen ausgebildet und überragt diesen zu beiden Seiten, so daß eine gute Kraftübertragung gewährleistet ist. Dabei ist das Profilelement bevorzugt symmetrisch, insbesondere symmetrisch zur vertikalen Achse des Riemens ausgebildet.

Bevorzugt weist das Profilelement Polyurethan auf oder besteht aus Polyurethan oder einem anderen Material, das einen vergleichsweise hohen Reibungskoeffizienten aufweist und zudem seitlich biegbar ist. Das Profilelement ist bevorzugt im wesentlichen "T"-förmig ausgebildet. Das bedeutet, daß das "zentrale Bein" des "T's" mit einem mittleren Schlitz ausgestattet auf den Riemen aufsetzbar und mit diesem verbindbar ist und der obere Querbalken des "T's" mit einem im Vergleich zur Oberkante des Riemens verbreiterten Fläche zur Anlage an der Rolle kommen kann. Besonders bevorzugt ist das Profilelement dabei als 2-Punkt-Auflage ausgebildet. Bei einer Ausbildung als T-Profil sind dabei die beiden äußeren Enden nach oben gewölbt, so daß sich insgesamt eine muldenartige Biegung oder Wölbung ergibt. Die beiden äußeren Bereiche bilden dann die 2-Punkt-Auflage.

In einer anderen besonders bevorzugten Ausgestaltung ist das Profilelement derart gewölbt ausgebildet, daß sich eine hügelartige oder konvexe Wölbung ergibt. Dabei ist der mittlere, mit den Rollen in Kontakt tretende Teil des Profilelementes höher als die Außenbereiche des Profilelementes, die seitlich über den Riemen hinausragen. Das Profilelement ist dabei bevorzugt kreissegmentartig ausgebildet und weist in einer weiteren bevorzugten Ausführungsform eine Ausnehmung auf, wobei die Ausnehmung günstigerweise eine längliche Form hat und in konstantem Abstand zur oberen Abschlußfläche des Profilelementes ausgebildet ist. Durch diese Ausnehmung wird erreicht, daß das Profilelement pufferartig nachgeben kann und eine in Längsrichtung des Riemens erfolgende Umschlingung der Rollen erfolgen kann, so daß das Profilelement nicht nur an einem Punkt mit der Rolle in Kontakt kommt, sondern in Zugrichtung gesehen auf einer gewissen Länge.

Der Riemen ist im Querschnitt im wesentlichen rechteckig ausgebildet. Derartige Riemen sind besonders einfach und belastbar herstellbar. In einer anderen bevorzugten Weiterentwicklung der Erfindung sind der Riemen und das Profilelement einstückig ausgebildet.

Der Riemen ist bevorzugt im Bereich der Innenkurve des Rollenförderers angeordnet und liegt in diesem Bereich an den Rollen an. Der Rollenförderer weist günstigerweise ballige Antriebs- und Führungselemente auf, mit denen der vertikal liegende Riemen geführt wird, um ein Verdrehen zu verhindern. Weiterhin ist es günstig, an dem vertikal ausgerichteten Riemen seitlich angeordnete Kugellager vorzusehen. Dadurch wird eine besonders gute Kurvenführung erreicht. Die Kugellager sind bevorzugt in Kurvenbereichen im Außenradius angeordnet. In einer Weiterentwicklung sind die Kugellager mit gewissen Abständen alternierend zu beiden Seiten des Riemens angeordnet.

Ein weiterer Aspekt der Erfindung besteht in der Bereitstellung eines Riemens für den erfindungsgemäßen Rollenförderer mit den oben beschriebenen bevorzugten Ausgestaltungen.

Nachfolgend wird die Erfindung anhand eines in der Zeichnung dargestellten bevorzugten Ausführungsbeispiels weiter erläutert. Im einzelnen zeigen die schematischen Darstellungen in:
- Fig. 1:: eine Querschnittsansicht eines erfindungsgemäßen Rollenförderers;
- Fig. 2:: eine perspektivische Ansicht eines Ausschnitts eines erfindungsgemäßen Rollenförderers;
- Fig. 3:: eine Querschnittsansicht eines Profilelementes;
- Fig. 4:: eine schematische Ansicht einer ersten Ausbildung eines erfindungsgemäßen Rollenförderers; und
- Fig. 5:: eine schematische Ansicht einer zweiten Ausbildung eines erfindungsgemäßen Rollenförderers.

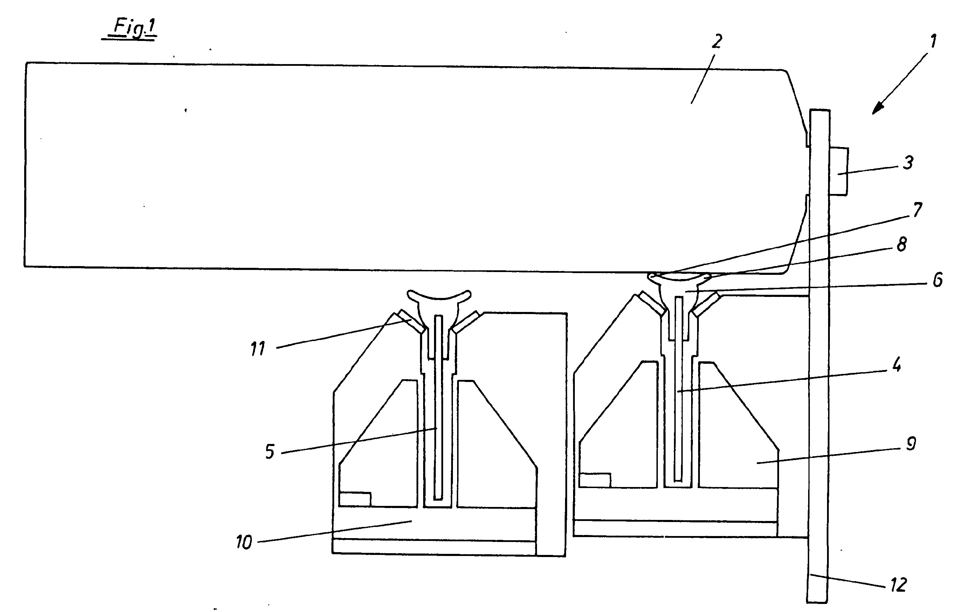

In Fig. 1 ist ein Querschnitt durch einen erfindungsgemäßen Rollenförderer dargestellt. Eine Rolle 2 mit einer Achse 3 ist in einer Seitenwange 12 gehalten. Eine Vielzahl von solchen hintereinander angeordneten Rollen 2 bilden den wesentlichen Teil des generell mit 1 bezeichneten Rollenförderers. Der Rollenförderer wird von einem vertikal angeordneten Riemen 4 mit im wesentlichen länglichem bzw. rechteckigem Querschnitt angetrieben. Derselbe umlaufende Riemen ist in seinem rücklaufenden Abschnitt mit 5 bezeichnet. Dieser rücklaufende Abschnitt des Riemens 5 ist tiefer geführt als der hinlaufende antreibende Abschnitt des Riemens 4, so daß nur der obere Bereich des Riemens 4 zur Anlage an die Rollen 2 kommt. Hierzu ist der Riemen 4 in einer Halterung 9 bzw. der rücklaufende Riemen 5 in einer Halterung 10 gehalten bzw. mit Antriebselementen 11 geführt und angetrieben. Der Riemen 4 weist an seiner oberen Kante ein Profilelement 6 auf, das zwei vorgewölbte bzw. nach oben gewölbte Bereiche 7 und 8 aufweist, die eine 2-Punkt-Auflage an der Rolle 2 bilden.

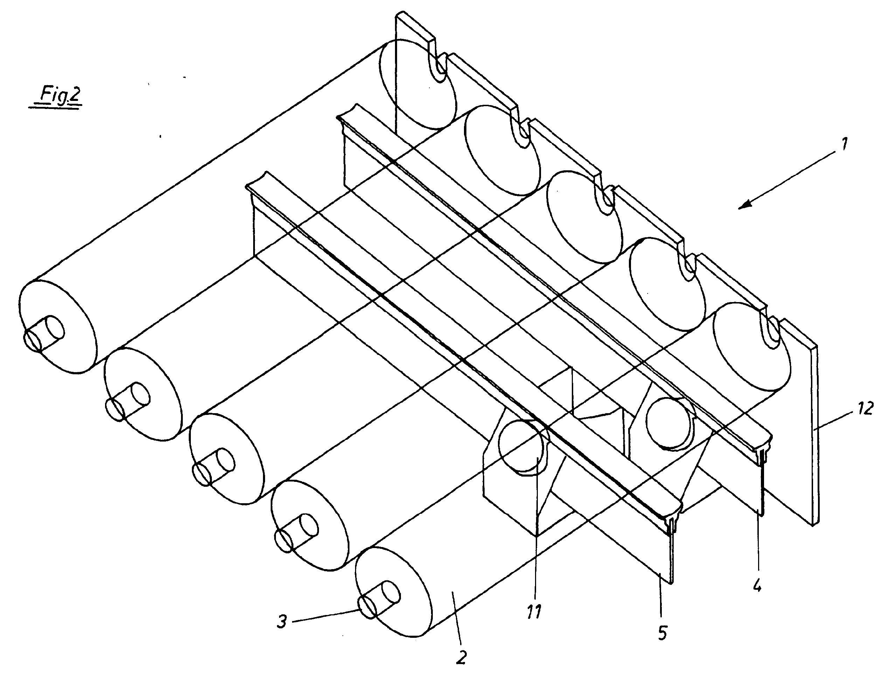

In Fig. 2 ist eine perspektivische Ansicht des Rollenförderers 1 gemäß Fig. 1 dargestellt. Gleiche Teile sind mit gleichen Bezugszahlen gekennzeichnet. Deutlicher zu erkennen sind hier die in den Halterungen 9 und 10 angeordneten Antriebselemente bzw. Führungselemente 11.

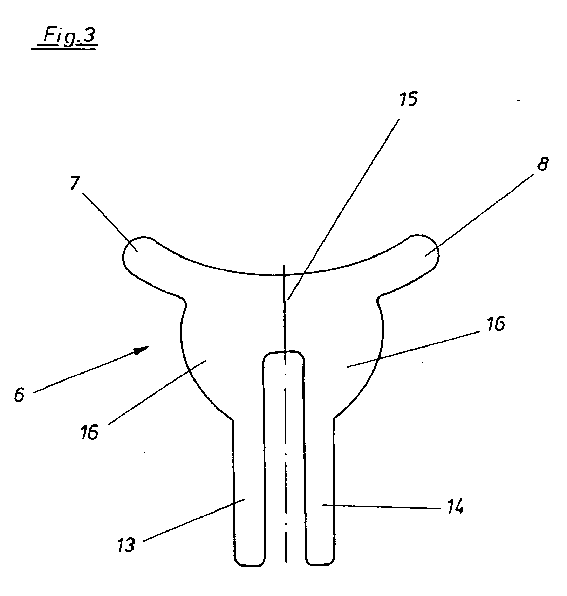

In Fig. 3 ist eine Querschnittsansicht eines Profilelementes 6 dargestellt. Dieses ist im wesentlichen T-förmig ausgebildet, wobei das zentrale Bein des T's von den beiden länglichen Abschnitten 13 und 14 gebildet ist, die zwischen sich eine Kerbe einschließen und insgesamt so ausgebildet sind, daß zwischen ihnen der Riemen 4 bzw. 5 einschiebbar und dort festnähbar oder auf andere Weise zu befestigen ist. Der obere Bereich 15 ist verbreitert ausgebildet, so daß insgesamt eine gegenüber der Oberkante des Riemens verbreiterte Auflagefläche entsteht. Dabei sind die beiden äußeren Endbereiche 7 und 8 hoch gewölbt, so daß eine 2-Punkt-Auflage gebildet ist. In den seitlichen Bereichen sind kreisförmige, nach außen gewölbte und verdickte Bereiche 16 ausgebildet, an denen Antriebs- und Führungselemente angreifen können. Durch die verstärkt und kugelförmig nach außen ausgebildeten Bereiche 16 wird verschleißbedingtem Ausfall des Rollenförderers entgegengewirkt.

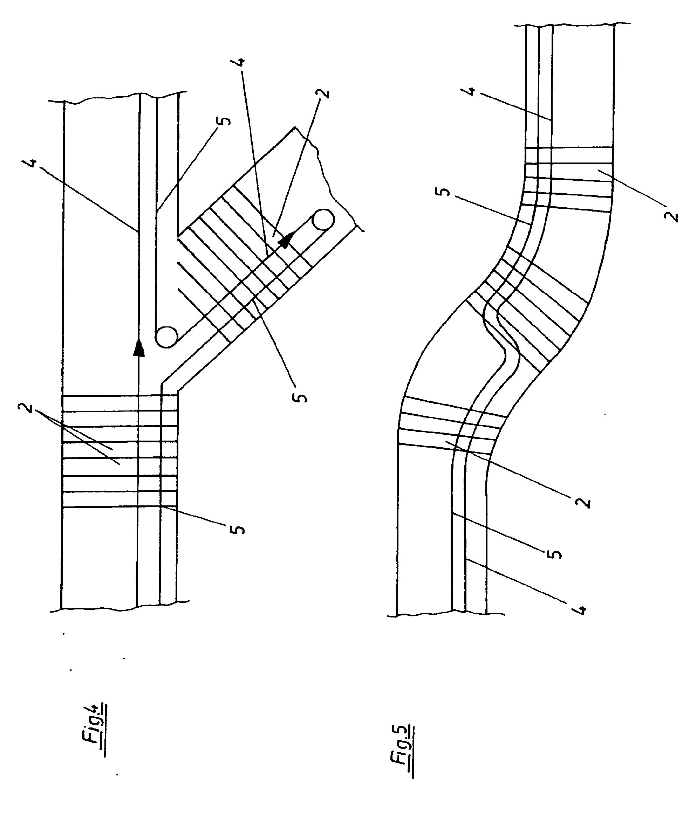

In Fig. 4 ist eine erste Ausbildung eines erfindungsgemäßen Rollenförderers dargestellt. Der antreibende Riemen 4 läuft in Pfeilrichtung. Durch die erfindungsgemäße Verwendung der Riemen ist es möglich, diesen auch in einem Ein- oder Ausschleuser zu verwenden, ohne daß hierfür weitere Motoren notwendig wären, so wie in Fig. 4 dargestellt.

In Fig. 5 ist eine S-Kurve dargestellt, bei der der antreibende Riemen 4 immer an der Innenseite der Kurve geführt ist, wobei dann im zentralen Abschnitt der Kurve, an dem sich mathematisch gesprochen das Vorzeichen der Steigung ändert, die Riemen auf die andere Seite geführt werden, so daß dann der antreibende Riemen 4 wieder auf der Innenbahn der Kurve des Rollenförderers entlang läuft.

Bei einer zweiten Ausführungsform eines erfindungsgemäßen Rollenförderers sind abweichend zur Darstellung gemäß Fig. 1 an der oberen Kante des umlaufenden Riemens bzw. des rücklaufenden Riemens im oberen Endbereich bzw. an der oberen Kante ein Profilelement angeordnet, das in seiner geometrischen Ausgestaltung abweichend von der Ausführungsform gemäß Fig. 1 ausgestaltet ist. Das Profilelement liegt in der Halterung bzw. beim rücklaufenden Riemen in der Halterung an Antriebs- und Führungselementen an, die insbesondere an dem Profilelement angreifen. Die Antriebselemente weisen Rollen- und/oder Kugellager auf. Weiterhin sind hier an dem vertikalen Riemen seitlich angeordnete Kugellager vorgesehen, mit denen eine bessere Kurvenführung erreicht wird. Auf dem vertikalen Riemen ist das Profilelement angeordnet, das einen oberen verbreiterten Bereich aufweist, der sich an die beiden länglichen Abschnitte und anschließt, die zwischen sich eine Kerbe bilden und so ausgebildet sind, daß zwischen ihnen der Riemen bzw. der Riemen einschiebbar und dort festgenäht oder auf andere Weise befestigt ist. Der obere Bereich ist breiter als der untere Bereich mit den länglichen Abschnitten und ausgebildet. Der obere Bereich weist eine obere gewölbte Abschlußfläche auf, die in der Mitte ihren höchsten Punkt hat und nach außen abfällt. Insgesamt ist der obere Bereich nach Art eines Kreissegmentes ausgebildet. In dem oberen Bereich ist zudem eine durch das Profilelement verlaufende Ausnehmung vorgesehen, die mit konstantem Abstand zur Abschlußfläche ausgebildet ist. Die im Querschnitt längliche Ausnehmung ist daher ebenfalls gewölbt ausgebildet, wobei der höchste Punkt der Ausnehmung, so wie auch der höchste Punkt der Abschlußfläche genau oberhalb des vertikalen Riemens angeordnet ist und zu beiden äußeren Seiten etwas abfallend ausgebildet ist. Durch diese Ausbildung wird erreicht, daß insbesondere durch die Ausnehmung oder den Hohlraum eine Pufferfunktion gegeben ist und senkrecht zur Bildebene eine Umschlingung der angetriebenen Rolle erfolgen kann, so daß sich der Bereich, in dem das Profilelement an der Rolle anliegt, vergrößert.

## Patentansprüche

1. Rollenförderer mit drehbar angeordneten Rollen (2) zum Transport von Gütern mit einem unterhalb der Rollen (2) angeordneten Riemen (4, 5) zum Antrieb der Rollen (2), wobei der Riemen (4, 5) im wesentlichen vertikal ausgerichtet ist,
**dadurch gekennzeichnet,**
**daß** an der oberen, mit den Rollen (2) in Kontakt tretenden Kante des Riemens (4, 5) ein durchgängiges Profilelement (6) angeordnet ist, und
**daß** das Profilelement (6) breiter als der Riemen (4, 5) ausgebildet ist und diesen zu beiden Seiten überragt.

2. Rollenförderer nach Anspruch 1, **dadurch gekennzeichnet, daß** das Profilelement (6) symmetrisch zur vertikalen Achse des Riemens (4, 5) ausgebildet ist.

3. Rollenförderer nach einem der Ansprüche 1 oder 2, **dadurch gekennzeichnet, daß** das Profilelement (6) Polyurethan aufweist.

4. Rollenförderer nach einem der vorhergehenden Ansprüche, **dadurch gekennzeichnet, daß** das Profilelement (6) im wesentlichen T-förmig ist.

5. Rollenförderer nach einem der vorhergehenden Ansprüche, **dadurch gekennzeichnet, daß** der Teil des Profilelementes (6), der zur Anlage an den Rollen (2) vorgesehen ist, gewölbt ausgebildet ist.

6. Rollenförderer nach einem der vorhergehenden Ansprüche, **dadurch gekennzeichnet, daß** das Profilelement eine Ausnehmung aufweist.

7. Rollenförderer nach Anspruch 5 oder 6, **dadurch gekennzeichnet, daß** der obere Bereich des Profilelements nach Art eines Kreissegments ausgebildet ist.

8. Rollenförderer nach einem der Ansprüche 6 oder 7, **dadurch gekennzeichnet, daß** die Ausnehmung mit konstantem Abstand zur oberen Abschlußfläche des Profilelements ausgebildet ist.

9. Rollenförderer nach einem der Ansprüche 1 bis 5, **dadurch gekennzeichnet, daß** der Teil des Profilelementes (6), der zur Anlage an den Rollen (2) vorgesehen ist, als 2-Punkt-Auflage ausgebildet ist.

10. Rollenförderer nach einem der vorhergehenden Ansprüche, **dadurch gekennzeichnet, daß** der Riemen (4, 5) im Querschnitt im wesentlichen rechteckig ist.

11. Rollenförderer nach einem der vorhergehenden Ansprüche, **dadurch gekennzeichnet, daß** der Riemen (4, 5) und das Profilelement (6) einstückig ausgebildet sind.

12. Rollenförderer nach einem der vorhergehenden Ansprüche, **dadurch gekennzeichnet, daß** der Riemen (4) bevorzugt im Bereich der Innenbahn einer Kurve des Rollenförderers (1) angeordnet ist.

13. Rollenförderer nach einem der vorhergehenden Ansprüche, **dadurch gekennzeichnet, daß** der Rollenförderer (1) ballige Antriebe und Führungen aufweist.

14. Rollenförderer nach einem der vorhergehenden Ansprüche, **dadurch gekennzeichnet, daß** an dem vertikal ausgerichteten Riemen (4, 5) seitlich angeordnete Kugellager vorgesehen sind.

15. Riemen zur Verwendung in einem Rollenförderer (1) nach einem der vorhergehenden Ansprüche.

## Claims

1. A roller conveyor with rotatably arranged rollers (2) for the transport of goods with a belt (4, 5) arranged below the rollers (2) for driving the rollers (2), wherein the belt (4, 5) is orientated substantially vertically, **characterized in that** on the upper edge of the belt (4, 5) which comes in contact with the rollers (2) a continuous profile element (6) is arranged and that the profile element (6) is embodied wider than the belt (4, 5) and protrudes over said belt on both sides.

2. The roller conveyor according to Claim 1, **characterized in that** the profile element (6) is embodied symmetrically to the vertical axis of the belt (4, 5).

3. The roller conveyor according to any one of the Claims 1 or 2, **characterized in that** the profile element (6) comprises polyurethane.

4. The roller conveyor according to any one of the preceding claims, **characterized in that** the profile element (6) is substantially T-shaped.

5. The roller conveyor according to any one of the preceding claims, **characterized in that** the part of the profile element (6) which is provided for contacting the rollers (2) is embodied curved.

6. The roller conveyor according to any one of the preceding claims, **characterized in that** the profile element comprises a clearance.

7. The roller conveyor according to Claim 5 or 6, **characterized in that** the upper region of the profile element is embodied in the manner of a segment of a circle.

8. The roller conveyor according to any one of the Claims 6 or 7, **characterized in that** the clearance is formed with constant spacing to the upper end surface of the profile element.

9. The roller conveyor according to any one of the Claims 1 to 5, **characterized in that** the part of the profile element (6) which is provided for contacting the rollers (2) is embodied as two-point support.

10. The roller conveyor according to any one of the preceding claims, **characterized in that** the belt (4, 5) is substantially rectangular in cross section.

11. The roller conveyor according to any one of the preceding claims, **characterized in that** the belt (4, 5) and the profile element (6) are embodied of one piece.

12. The roller conveyor according to any one of the preceding claims, **characterized in that** the belt (4) is preferably arranged in the region of the inner track of a curve of the roller conveyor (1).

13. The roller conveyor according to any one of the preceding claims, **characterized in that** the roller conveyor (1) comprises crowned drives and guides.

14. The roller conveyor according to any one of the preceding claims, **characterized in that** on the vertically orientated belt (4, 5) laterally arranged ball bearings are provided.

15. A belt for use in a roller conveyor (1) according to any one of the preceding claims.

## Revendications

1. Convoyeur à rouleaux avec des rouleaux (2) disposés rotativement en vue du transport de produits avec une courroie (4,5) disposée en dessous des rouleaux (2) afin d'entraîner les rouleaux (2), dans lequel la courroie (4,5) a une configuration essentiellement verticale,
**caractérisé en ce que**
sur l'arête supérieure, entrant en contact avec les rouleaux (2) de la courroie (4,5), un élément de profilé (6) traversant est disposé, et
**en ce que** l'élément de profilé (6) a une configuration plus large que la courroie (4,5) et dépasse de celle-ci des deux côtés.

2. Convoyeur à rouleaux selon la revendication 1, **caractérisé en ce que** l'élément de profilé (6) a une configuration symétrique de part et d'autre de l'axe vertical de la courroie (4,5).

3. Convoyeur à rouleaux selon une des revendications 1 ou 2, **caractérisé en ce que** l'élément de profilé (6) présente du polyuréthane.

4. Convoyeur à rouleaux selon une des revendications précédentes, **caractérisé en ce que** l'élément de profilé (6) est essentiellement en forme de T.

5. Convoyeur à rouleaux selon une des revendications précédentes, **caractérisé en ce que** la partie de l'élément de profilé (6), qui est prévue afin de venir en appui sur les rouleaux (2), a une configuration incurvée.

6. Convoyeur à rouleaux selon une des revendications précédentes, **caractérisé en ce que** l'élément de profilé présente un évidement.

7. Convoyeur à rouleaux selon la revendication 5 ou 6, **caractérisé en ce que** la zone supérieure de l'élément de profilé est configurée comme un segment de cercle.

8. Convoyeur à rouleaux selon une des revendications 6 ou 7, **caractérisé en ce que** l'évidement est configuré avec un espacement constant par rapport à la surface de fermeture supérieure de l'élément de profilé.

9. Convoyeur à rouleaux selon une des revendications 1 à 5, **caractérisé en ce que** la partie de l'élément de profilé (6), qui est prévue afin de venir en appui sur les rouleaux (2), est configurée comme un appui à 2 points.

10. Convoyeur à rouleaux selon une des revendications précédentes, **caractérisé en ce que** la courroie (4,5) a une section transversale essentiellement rectangulaire.

11. Convoyeur à rouleaux selon une des revendications précédentes, **caractérisé en ce que** la courroie (4,5) et l'élément de profilé (6) sont configurés en un seul tenant.

12. Convoyeur à rouleaux selon une des revendications précédentes, **caractérisé en ce que** la courroie (4) est disposée de préférence au niveau de la voie intérieure d'une courbe du convoyeur à rouleaux (1).

13. Convoyeur à rouleaux selon une des revendications précédentes, **caractérisé en ce que** le convoyeur à rouleaux présente des entraînements et coulisses bombés.

14. Convoyeur à rouleaux selon une des revendications précédentes, **caractérisé en ce que** sur la courroie (4,5) orientée verticalement, des roulements à billes disposés latéralement sont prévus.

15. Convoyeur à rouleaux à utiliser dans un convoyeur à rouleaux (1) selon une des revendications précédentes.
